# EUROPÄISCHE PATENTSCHRIFT

(11) **EP 1 662 779 B1**
(45) Veröffentlichungstag und Bekanntmachung des Hinweises auf die Patenterteilung: **14.04.2010**
(21) Anmeldenummer: 05020992.3
(22) Anmeldetag: 27.09.2005
(51) Int. Cl.: H04N 5/44

(54) **Videoanzeigegerät und Darstellungsverfahren**
Video display apparatus and display method
Appareil d'affichage vidéo et procédé de visualisation

(30) Priorität: 25.11.2004 DE 102004057013
(43) Veröffentlichungstag der Anmeldung: 31.05.2006
(73) Patentinhaber: Trident Microsystems (Far East) Ltd., Grand Cayman (KY)
(72) Erfinder: Schu, Markus, 85435 Erding (DE)
(74) Vertreter: Epping - Hermann - Fischer

(56) Entgegenhaltungen:
- WO-A-99/21356
- DE-A1- 19 824 260
- US-A- 5 495 302
- US-A- 5 805 201
- US-A1- 2003 052 911
- US-A1- 2003 058 372
- US-B1- 6 259 486
- PATENT ABSTRACTS OF JAPAN Bd. 018, Nr. 260 (E-1549), 18. Mai 1994 (1994-05-18) & JP 06 038145 A (FUJI ELECTRIC CO LTD), 10. Februar 1994 (1994-02-10)

## Beschreibung

Videoanzeigegerät und Verfahren zur Verarbeitung eines Videosignals zur Optimierung der Bilddarstellung

Die vorliegende Erfindung betrifft ein Videoanzeigegerät und ein Verfahren zur Verarbeitung eines Videosignals und Darstellung des Videosignals auf einer Anzeigevorrichtung.

In Fernsehgeräten mit Flachbildschirmen (Flat Panels), wie beispielsweise LCD-Bildschirmen oder Plasmabildschirmen, sind zur Verbesserung der Bilddarstellung üblicherweise verschiedene Bildverarbeitungsverfahren implementiert, die beispielsweise dazu dienen sollen, für einen Betrachter, den Eindruck einer optimalen Darstellung, d.h. eine Darstellung mit hoher Bildschärfe, hoher Tiefenschärfe, hohem Kontrast geringem Bildrauschen, usw., zu erzeugen. Ein Verfahren zur Steigerung der Bildschärfe ist beispielsweise in Rieder, Peter; Scheffler, Günter: "New Concepts on Denoising and Sharpening of Video Signals" beschrieben.

Die Parameter dieser Bildverarbeitungsverfahren sind dabei so eingestellt, dass ein für das menschliche Auge optimaler Bildeindruck dann entsteht, wenn das Bild aus einem Abstand betrachtet wird, der dem 4-fachen bis 6-fachen der Bildschirmdiagonalen entspricht. Bei Betrachtung aus geringerer Distanz, insbesondere aus einer Distanz, die geringer ist als das 2-fache der Bildschirmdiagonalen, entsteht bei Fernsehgeräten, die moderne Bildbearbeitungsverfahren zur Optimierung der Bilddarstellung nutzen, für das menschliche Auge allerdings der Eindruck eines verrauschten, "Pixelwolken" enthaltenden Bildes.

Die Parameter dieser Bildverarbeitungsverfahren lassen sich in vorgegebenen Grenzen durch den Benutzer - beispielsweise über die Fernbedienung - einstellen, um aus unterschiedlichen Entfernungen einen optimalen Seheindruck zu erhalten. Werkseitige Voreinstellungen der Geräte sind üblicherweise so, dass der optimale Eindruck bei dem empfohlenen Betrachtungsabstand (4- bis 6-fache Bildschirmdiagonale) erhalten wird.

Während ein Betrachter normalerweise den empfohlenen Abstand einhält, schon deshalb, um das ganze Bild entspannt erfassen zu können, nähern sich potentielle Kunden dem Gerät vor dem Kauf üblicherweise wesentlich weiter. Der dabei aus der Nähe gewonnene Eindruck eines verrauschten Bildes kann dazu führen, dass sich Kunden gegen das Gerät entscheiden, obwohl bei Betrachtung aus dem optimalen Abstand der Eindruck einer guten Bilddarstellung bei dem Betrachter vorhanden ist.

Die US 6,259,486 B1 beschreibt eine Sensoreinheit zur Steuerung des Betriebs eines Fernsehgerätes. Diese Sensoreinheit unterbricht aus Energiespargründen die Stromversorgung des Fernsehgerätes, wenn innerhalb eines Zeitfensters einer vorgegebenen Zeitdauer keine Bewegung vor dem Fernsehgerät detektiert wird.

Die US 5,495,302 beschreibt ein Fernsehgerät bei dem zum Schutz eines Zusehers vor elektromagnetischer Strahlung die Zuführung eines Hochfrequenzsignals zu einer Signalverarbeitungseinheit unterbrochen wird, wenn sich der Zuseher zu nahe am Fernsehgerät befindet. Ein Abstand des Zusehers zu dem Fernsehgerät wird hierbei mittels eines Näherungsdetektors ermittelt.

Ziel der vorliegenden Erfindung ist es daher ein Videoanzeigegerät und ein Verfahren zur Verarbeitung eines Videosignals und Darstellung eines durch das Videosignals repräsentierten Bildinhalts zur Verfügung zu stellen, bei dem eine für den Betrachter stets optimale Bilddarstellung gewährleistet ist.

Dieses Ziel wird durch ein Videoanzeigegerät nach Anspruch 1 und ein Verfahren zur Verarbeitung eines Videosignals nach Anspruch 12 gelöst. Vorteilhafte Ausgestaltungen der Erfindung sind Gegenstand der Unteransprüche.

Das erfindungsgemäße Videoanzeigegerät weist einen Eingang zur Zuführung eines Videosignals, wenigstens eine Signalverarbeitungsvorrichtung zur Verarbeitung des Videosignals sowie eine Anzeigevorrichtung, die einen Bildschirm aufweist und der ein darzustellendes Videosignal zur Bilddarstellung zugeführt ist, auf. Außerdem ist eine Abstandsdetektorvorrichtung vorgesehen, die dazu ausgebildet, einen vorgegebenen räumlichen Bereich vor dem Bildschirm auf in diesem Bereich vorhandene Objekte zu überwachen und ein Detektionssignal zu erzeugen, wobei das darzustellende Videosignal nach Maßgabe des Detektionssignals aus dem zugeführten Videosignal gebildet ist.

Die erfindungsgemäße Anzeigevorrichtung, bei der eine Verarbeitung des zugeführten Videosignals abhängig vom Vorhandensein eines Objekts in einem überwachten räumlichen Bereich vor dem Bildschirm erfolgt, kann so konfiguriert werden, dass für einen sich vor dem Bildschirm aufhaltenden Betrachter stets eine optimale subjektive Bilddarstellung gewährleistet ist.

Bei einer Ausführungsform ist vorgesehen, dass das zugeführte Videosignal durch die Signalverarbeitungsvorrichtung abhängig von dem Detektionssignal verarbeitet wird, d.h. das Detektionssignal dient zur Einstellung von Verarbeitungsparametern der Signalverarbeitungsvorrichtung. Einstellbare Bildparameter sind beispielsweise der Bildkontrast, die Bildschärfe und Tiefenschärfe, der Umfang einer Rauschunterdrückung oder die Bildsättigung. Die Verarbeitung des Videosignals in der Signalverarbeitungsschaltung erfolgt beispielsweise unter Verwendung einer Nachschlagetabelle, die dazu dient, jeden Signalwert des Videosignals auf einen Signalwert des am Ausgang der Signalverarbeitungsschaltung bereitgestellten Ausgangssignals abzubilden. Dabei können in der Signalverarbeitungsschaltung wenigstens zwei Nachschlagetabellen vorhanden sein, die eine unterschiedliche Signalverarbeitung bewirken. Von diesen Nachschlagetabellen wird abhängig von dem Detektionssignal eine ausgewählt, um die Verarbeitungscharakteristik zu bestimmen.

Das Detektionssignal ist ein wenigstens zweiwertiges Signal, das einen ersten Signalpegel annimmt, wenn kein Objekt in dem zu überwachenden Bereich detektiert wird, und das einen zweiten Signalpegel annimmt, wenn ein Objekt in dem zu überwachenden Bereich detektiert wird. Über ein solches zweiwertiges Detektionssignal sind zwei unterschiedliche Verarbeitungscharakteristiken einstellbar. Beispielsweise dann, wenn sich ein Betrachter innerhalb des überwachten Bereiches, das heißt sehr nahe an dem Bildschirm befindet, werden Signalverarbeitungsmaßnahmen reduziert, die zwar aus der Ferne einen sehr guten Bildeindruck liefern, die aus der Nähe betrachtet jedoch den Eindruck eines verrauschten Bildes entstehen lassen. Diese Verarbeitungsmaßnahmen können auch vollständig unterbleiben, wenn das Detektionssignal darauf hindeutet, dass sich der Betrachter innerhalb des überwachten Bereiches befindet.

Die Abstandsdetektorvorrichtung kann auch dazu ausgebildet sein, den tatsächlichen Abstand zwischen dem Objekt, d.h. einem Betrachter, und dem Bildschirm zu ermitteln, wobei die Signalverarbeitungsschaltung in diesem Fall dazu ausgebildet ist, die Signalverarbeitungsparameter über das Detektionssignal abhängig von dem Abstand des Betrachters zu dem Bildschirm einzustellen, um Signalverarbeitungsmaßnahmen, die bei Betrachtung des Bildes aus der Nähe einen verrauschten Bildeindruck entstehen lassen, mit geringer werdendem Abstand zwischen dem Betrachter und dem Bildschirm zu reduzieren.

Der durch die Abstandsdetektorvorrichtung überwachte Bereich ist vorzugsweise von der Bildschirmdiagonale des Bildschirmes abhängig und liegt beispielsweise innerhalb eines Abstandes von dem Bildschirm, der weniger als das 4-fache, vorzugsweise weniger als das 2-fache einer Bildschirmdiagonale des Bildschirms entspricht.

Bei einer weiteren Ausführungsform des Videoanzeigegerätes ist vorgesehen, das Videosignal der Signalverarbeitungsvorrichtung nur dann zur Verarbeitung zuzuführen, wenn kein Objekt innerhalb des überwachten Bereiches detektiert wird. Wird ein Objekt innerhalb des überwachten Bereiches detektiert, befindet sich also ein Betrachter sehr nahe an dem Bildschirm, so wird die Signalverarbeitungsvorrichtung umgangen und das zugeführte Videosignal wird unmittelbar der Anzeigevorrichtung zur Darstellung des durch das Videosignal repräsentierten Bildinhaltes zugeführt. Eine Verarbeitung des Videosignals unterbleibt damit.

Als Sensor zur Erfassung eines Objektes innerhalb des überwachten Bereiches weist die Abstandsdetektorvorrichtung vorzugsweise einen Infrarotsensor auf, der vorzugsweise so ausgebildet ist, dass nur sich bewegende, eine Temperatur oberhalb der Umgebungstemperatur aufweisende Objekte detektiert werden.

Zur Erfassung des Abstandes zwischen dem Bildschirm und einem Objekt, d.h. einem sich dem Bildschirm nähernden Betrachter, eignet sich eine Ultraschallsensor, der mit einem Infrarotsensor kombiniert werden kann oder der als einziger Sensor verwendet werden kann.

Das Videoanzeigegerät ist vorzugsweise so ausgebildet, dass das darzustellende, der Anzeigevorrichtung zugeführte Videosignal gemäß einer Voreinstellung aus dem zugeführten Videosignal erzeugt wird, wenn die Abstandsdetektorvorrichtung für eine Zeitdauer, die länger als eine vorgegebene Zeitdauer ist, kein Objekt in dem überwachten Bereich detektiert, also dann, wenn ein Betrachter den durch die Abstandsdetektorvorrichtung überwachten Bereich vor dem Bildschirm wieder verlassen hat.

Die vorliegende Erfindung wird nachfolgend anhand von Figuren näher erläutert.
- Figur 1: zeigt schematisch ein erfindungsgemäßes Videoanzeigegerät mit einer einen Bildschirm aufweisenden Anzeigevorrichtung und einer Abstandsdetektorvorrichtung.
- Figur 2: zeigt schematisch eine Draufsicht auf den Bildschirm der Anzeigevorrichtung und veranschaulicht beispielhaft die Position eines an dem Bildschirm angeordneten Abstandssensors.
- Figur 3: zeigt schematisch ein weiteren Ausführungsbeispiel des erfindungsgemäßen Videoanzeigegerätes.

In den Figuren bezeichnen, sofern nicht anders angegeben, gleiche Bezugszeichen gleiche Komponenten und Signale mit gleicher Bedeutung.

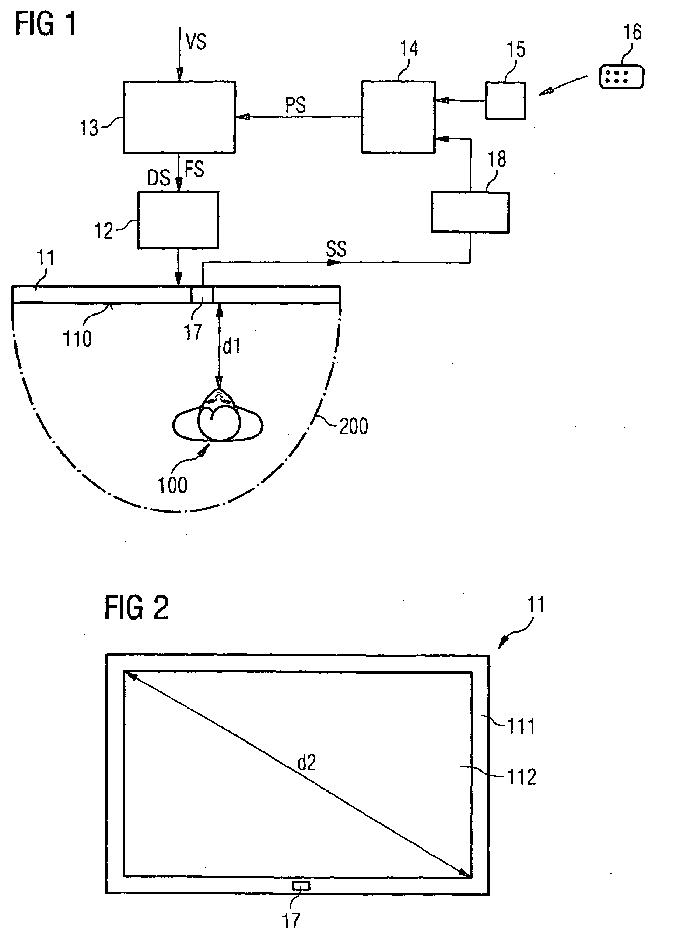

Figur 1 zeigt schematisch den Aufbau eines ersten Ausführungsbeispieles eines erfindungsgemäßen Videoanzeigegerätes. Das Videoanzeigegerät weist einen Eingang zur Zuführung eines Videosignals VS auf. Dieses Videosignal VS repräsentiert eine Bildfolge, deren Inhalt dargestellt werden soll. Das Videosignal VS ist in dem Beispiel einer Signalverarbeitungsvorrichtung 13 zugeführt, welche das zugeführte Signal VS verarbeitet, um ein verarbeitetes Signal FS zur Verfügung zu stellen. Dieses Signal FS ist einer Anzeigevorrichtung zugeführt, die einen Bildschirm 11 aufweist, der zur Darstellung des Bildinhalts des Signals FS dient. Der Bildschirm ist ein Flachbildschirm, beispielsweise ein LCD-Bildschirm oder ein Plasma-Bildschirm, der in Figur 1 schematisch in Draufsicht dargestellt ist. Mit 100 ist in Figur 1 ein Betrachter bezeichnet, der sich in einem Abstand d1 zu dem Bildschirm 100 aufhält. Das Bezugszeichen 12 in Figur bezeichnet eine hinlänglich bekannte Ansteuerschaltung für den Bildschirm 11, die beispielsweise einen Bildspeicher zur Zwischenspeicherung des auf dem Bildschirm 11 darzustellenden Bildes aufweist.

In der Signalverarbeitungsvorrichtung 13 sind grundsätzlich bekannte Signalverarbeitungsverfahren, beispielsweise Verfahren zur Bildschärfeverbesserung und/oder Tiefenschärfengenerierung implementiert, die in bekannter Weise dazu dienen, den subjektiven Bildeindruck für einen Betrachter zu verbessern, der sich in einem empfohlenen Abstand zu dem Bildschirm 11 aufweist. Dieser empfohlene Abstand beträgt üblicherweise das 4-fache bis 6-fache einer Bildschirmdiagonale d2 des Bildschirmes 11, der in Figur 2 in Draufsicht auf einen Darstellungsbereich 112 dargestellt ist.

Das der Signalverarbeitungsvorrichtung 13 zugeführte Videosignal VS kann in nicht näher dargestellter Weise bereits weitere Signalverarbeitungsmaßnahmen durchlaufen haben, beispielsweise solche, die aus einem eine Halbbildfolge repräsentierenden Fernsehsignal ein Videosignal mit einer Vollbildfolge zur Darstellung auf dem Bildschirm erzeugen.

Die Verarbeitungscharakteristik der Signalverarbeitungsschaltung 13 ist über ein Einstellsignal bzw. Parametersignal PS einstellbar. Über dieses Einstellsignal PS werden beispielsweise die Verarbeitungsparameter dieser Signalverarbeitungsvorrichtung 13 vorgegeben. Die Einstellbarkeit der Signalverarbeitungsvorrichtung 13 eröffnet einem Benutzer grundsätzlich die Möglichkeit, die durch die Signalverarbeitungsvorrichtung hervorgerufenen Darstellungseffekte, beispielsweise eine besonders ausgeprägte Bildschärfe oder eine besonders ausgeprägte Tiefenschärfe, zu verändern. Die Einstellung durch den Benutzer kann in hinlänglich bekannter Weise über eine Fernbedienung 16 erfolgen, die ausgelöst durch einen Benutzer ein geeignetes Signal an einen Empfänger 15 der Fernbedienung 16 sendet. Dieser Empfänger 15 ist an eine Parametersignalerzeugungsschaltung 14 angeschlossen, die das Parametersignal PS für die Signalverarbeitungsvorrichtung 13 bereitstellt, wobei der Benutzer über die Fernbedienung 16 Einfluss auf die Einstellung dieses Parametersignals PS nehmen kann.

Erfindungsgemäß weist das Videoanzeigegerät eine Abstandsdetektorvorrichtung 17, 18 auf, die einen auf der Betrachtungsseite 110 vor dem Bildschirm 11 liegenden Bereich 200 dahingehend überwacht, ob ein Objekt in diesem überwachten Bereich 200 vorhanden ist, d.h. ob sich ein Betrachter in diesem Bereich 200 aufhält. Die Abstandsdetektorvorrichtung weist einen Sensor 17 und eine an den Sensor 17 angeschlossene Auswerteschaltung 18 auf. Diese Auswerteschaltung 18 ist an die Parametersignalerzeugungsschaltung 14 gekoppelt, um abhängig von dem Vorhandensein eines Betrachters 100 in dem überwachten Bereich 200 Einfluss auf die Verarbeitung des Videosignals VS in der Signalverarbeitungsvorrichtung 13 zu nehmen.

Der Sensor 17 ist beispielsweise ein Infrarot-Bewegungssensor, der bei einer ersten Ausführungsform ein zweiwertiges Sensorsignal SS liefert, das einen ersten Signalpegel annimmt, wenn der Sensor 17 ein sich bewegendes Objekt innerhalb des überwachten Bereiches 200 detektiert, und das sonst einen zweiten Signalpegel annimmt. Die Auswerteschaltung 18 wertet dieses Sensorsignal SS aus, um abhängig von dem Sensorsignal SS über die Parametersignalerzeugungsschaltung 14 die Verarbeitungscharakteristik der Signalverarbeitungsvorrichtung 13 zu beeinflussen. Die Parametersignalerzeugungsschaltung 14 und die Auswerteschaltung 18 sind dabei so aufeinander abgestimmt, dass der Signalverarbeitungsvorrichtung 13 ein von dem Benutzer über die Fernbedienung 16 oder ein werkseitig voreingestelltes Parametersignal PS zugeführt ist, wenn der Sensor 17 kein sich bewegendes Objekt innerhalb des überwachten Bereiches detektiert. Bei Detektion eines sich bewegendes Objektes in dem überwachten Bereich 200 erfolgt eine Änderung der Verarbeitungscharakteristik über das Parametersignal PS dahingehend, dass sich für einen sich innerhalb des Überwachungsbereiches 200 befindlichen Benutzer 100 ein subjektiv optimaler Bildeindruck ergibt. Hierzu wird der Signalverarbeitungsvorrichtung 13 durch die Parametersignalerzeugungsschaltung 14 angesteuert durch die Sensor-Auswerteschaltung 18 ein Parametersignal PS gemäß einer weiteren Voreinstellung zugeführt.

Bei einer Ausführungsform, bei der die Signalverarbeitungsvorrichtung 13 eine Signalverarbeitungsschaltung zur Bildschärfeverbesserung und/oder Tiefenschärfengenerierung ist, ist vorgesehen, bei Detektion eines sich bewegenden Objekts innerhalb des Überwachungsbereiches 200 die Signalverarbeitungsparameter so einzustellen, dass das Videosignal VS die Signalverarbeitungsvorrichtung 13 unverarbeitet- allenfalls verzögert - passiert. Es hat sich gezeigt, dass die Signalverarbeitungsvorrichtungsmaßnahmen zur Bildschärfenverbesserung und Tiefenschärfengenerierung gerade bei Betrachtung des dargestellten Bildes aus geringem Abstand zu einem subjektiv schlechteren Bildeindruck als ohne Durchführung dieser Signalverarbeitungsvorrichtungsmaßnahmen führt.

Bei einer weiteren Ausführungsform ist vorgesehen, dass der Sensor 17 den Bereich 200 nicht nur dahingehend überwacht, ob sich ein Objekt in diesem Bereich befindet, sondern das der Sensor 17 auch den Abstand d1 dieses Objekts 100 ermittelt. In Kenntnis der Information über den Abstand des Objekts zu dem Bildschirm 100 erfolgt bei dieser Ausführungsform über die Auswerteschaltung 18 eine Anpassung des Parametersignals PS abhängig vom Abstand des Objekts 100 zu dem Bildschirm 11. Der Sensor ist bei dieser Ausführungsform beispielsweise als Ultraschallsensor ausgebildet oder umfasst zusätzlich zu dem Infrarot-Bewegungssensor einen Ultraschallsensor.

Der Sensor 17 ist bezugnehmend auf Figur 2 beispielsweise in einem den Darstellungsbereich 112 des Bildschirms 11 umgebenden Rahmen 111 integriert. Der Sensor 17 ist dazu ausgebildet, einen in Draufsicht etwa halbkreisförmigen Bereich vor der Betrachtungsseite 110 des Bildschirms auf das Vorhandensein eines Objekts. Die Auswerteschaltung 18 ist vorzugsweise dazu ausgebildet, die Signalverarbeitungsvorrichtungscharakteristik über die Parametersignalerzeugungsschaltung 14 nach Detektion eines sich bewegenden Objektes in dem überwachten Bereich 200 für eine vorgegebene Zeitdauer zu beeinflussen und diese Beeinflussung nach einer vorgegebenen Zeitdauer, innerhalb derer kein Objekt in dem überwachten Bereich 200 mehr detektiert wird, zurückzunehmen.

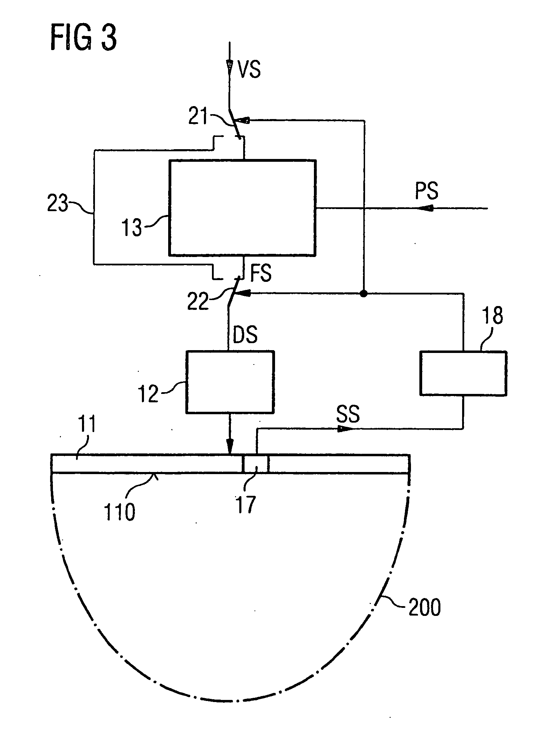

Figur 3 zeigt ein weiteres Ausführungsbeispiel eines erfindungsgemäßen Videoanzeigegerätes. Bei diesem Ausführungsbeispiel ist eine Bypass-Schaltung für die Signalverarbeitungsschaltung 13 vorgesehen. Diese Bypass-Schaltung umfasst einen ersten Umschalter 21, der der Signalverarbeitungsschaltung 13 vorgeschaltet ist, und einen zweiten Schalter 22, der der Signalverarbeitungsschaltung 13 nachgeschaltet ist. Die Bypass-Schaltung umfasst außerdem einen die Signalverarbeitungsschaltung 13 umgehenden Signalpfad 23 und ist dazu ausgebildet, entweder das Videosignal VS der Signalverarbeitungsschaltung 13 zuzuführen und das verarbeitete Signal FS als darzustellendes Signal DS der Anzeigevorrichtung 11, 12 zuzuführen, oder das Videosignal VS unter Umgehung der Signalverarbeitungsschaltung 13 unmittelbar der Anzeigevorrichtung 12, 13 als darzustellendes Signal DS zuzuführen. Die Ansteuerung der beiden Schalter 21, 22 erfolgt über die Auswerteschaltung 18 des Sensors 17, wobei die Auswerteschaltung 18 und die Bypass-Schaltung 21, 22 so aufeinander abgestimmt sind, dass die Signalverarbeitungsschaltung 13 umgangen wird, wenn der Sensor 17 ein Objekt innerhalb des überwachten Bereiches 200 vor der Betrachtungsseite 110 des Bildschirms 11 detektiert.

Die Umgehung der Signalverarbeitungsschaltung 13 wird beispielsweise dann rückgängig gemacht, wenn nach Detektion eines Objekts innerhalb des überwachten Bereiches 200 für eine vorgegebene Zeitdauer kein Objekt innerhalb des überwachten Bereiches 200 mehr detektiert wurde.

Neben den erläuterten Infrarot-Bewegungssensoren und Ultraschallsensoren sind selbstverständlich beliebige weitere Sensoren in Zusammenhang mit der erfindungsgemäßen Videoanzeigegerät einsetzbar, die geeignet sind, ein Objekt, vorzugsweise ein sich bewegendes Objekt, innerhalb eines überwachten Bereiches 200 vor dem Bildschirm 11 zu detektieren.

Der überwachte Bereich 200 umfasst vorzugsweise solche Bereiche, deren Abstand zu dem Bildschirm 11 geringer ist, als ein für Flachbildschirme empfohlener Betrachtungsabstand. Dieser empfohlene Betrachtungsabstand beträgt üblicherweise das 4-fache bis 6-fache der Bildschirmdiagonale. Der überwachte Bereich ist vorzugsweise so gewählt, dass er Bereiche umfasst, deren Abstand zu dem Bildschirm geringer ist als das 4-fache der Bildschirmdiagonale, vorzugsweise geringer ist als das 2-fache der Bildschirmdiagonale, um die Erzeugung des der Anzeigevorrichtung 11, 12 zugeführten darzustellenden Signals DS aus dem Videosignal VS nur dann zu beeinflussen, wenn sich ein Betrachter 100 dem Bildschirm 11 ungewöhnlich stark nähert.

Bei einem weiteren Ausführungsbeispiel ist vorgesehen, den Abstand des Benutzers von dem Bildschirm unter Verwendung der Fernbedienung zu ermitteln, wofür angenommen wird, dass der Benutzer die Fernbedienung bei sich trägt. Für die Ermittlung des Abstandes des Benutzers zu dem Bildschirm könnte der an dem Bildschirm angeordnete Abstandssensor 17 dazu ausgebildet sein in regelmäßigen Zeitabständen ein Abfragesignal an die Fernbedienung 16 zu übersenden, auf das die Fernbedienung 16 ein Antwortsignal zurücksendet. Aus der Zeitdifferenz zwischen dem Aussenden des Abfragesignals und dem Erhalt des Antwortsignals kann dann der Abstand zwischen dem Benutzer, d.h. der Fernbedienung des Benutzers, und dem Bildschirm ermittelt werden.

Bezugszeichenliste
- d1: Bildschirmabstand des Betrachters
- d2: Bildschirmdiagonale
- DS: darzustellendes Signal
- FS: verarbeitetes Signal
- PS: Einstellsignal, Parametersignal
- SS: Sensorsignal
- VS: Videosignal
- 11: Bildschirm
- 12: Bildschirm-Ansteuereinheit
- 13: Signalverarbeitungsvorrichtung
- 14: Parametersignalerzeugungsschaltung
- 15: Fernbedienungsempfänger
- 16: Fernbedienung
- 17: Sensor
- 18: Auswerteschaltung
- 23: Signalpfad zur Umgehung der Signalverarbeitungsvorrichtung
- 21, 22: Schalter
- 100: Betrachter
- 110: Betrachtungsseite
- 111: Rahmen des Bildschirms
- 112: Darstellungsbereich des Bildschirms
- 200: überwachter Bereich

## Patentansprüche

1. Videoanzeigegerät, aufweisend
- einen Eingang zur Zuführung eines Videosignals (VS),
- eine Anzeigevorrichtung (11, 12), die einen Bildschirm aufweist und der ein darzustellendes Videosignal zur Bilddarstellung zuführbar ist,
- eine Abstandsdetektorvorrichtung (17, 18), die dazu ausgebildet ist, einen vorgegebenen Bereich vor dem Bildschirm (11) auf in dem Bereich vorhandene Objekte zu überwachen, und die ein Detektionssignal erzeugt, wobei das darzustellende Videosignal (DS) nach Maßgabe des Detektionssignals aus dem zugeführten Videosignal (VS) gebildet ist, und
- wenigstens eine Signalverarbeitungsvorrichtung (13), die eingerichtet ist, das zugeführte Videosignal (VS) in Abhängigkeit von Bildverarbeitungsparametern zu verarbeiten, um ein verarbeitetes Signal (FS) zur Darstellung auf der Anzeigevorrichtung zur Verfügung zu stellen, wobei die Bildverarbeitungsparameter der Signalverarbeitungsvorrichtung (13) in Abhängigkeit des Detektionssignals einstellbar sind;
bei dem die einstellbaren Bildverarbeitungsparameter wenigstens eines der folgenden umfassen:
- einen Bildkontrast,
- eine Bildschärfe,
- eine Tiefenschärfe,
- einen Umfang einer Rauschunterdrückung,
und weiter aufweisend
eine Bypass-Schaltung die eingerichtet ist, nach Maßgabe des Detektionssignals das zugeführte Videosignal (VS) der Signalverarbeitungsvorrichtung (13) zuzuführen und das verarbeitete Signal (FS) der Anzeigevorrichtung (11, 12) zuzuführen, oder das zugeführte Videosignal (VS) unmittelbar der Anzeigevorrichtung (11, 12) als darzustellendes Signal (DS) zuzuführen ; wobei
die Bypass-Schaltung (21, 22) eingerichtet ist, das zugeführte Videosignal (VS) unmittelbar der Anzeigevorrichtung (11, 12) als darzustellendes Signal (DS) zuzuführen, wenn das Detektionssignals auf ein Objekt innerhalb des überwachten Bereiches hinweist.

2. Videoanzeigegerät nach Anspruch 1, das dazu ausgebildet ist, dass eine Verarbeitung des Videosignals (VS) durch die wenigstens eine Signalverarbeitungsvorrichtung (13) unterbleibt, wenn das Detektionssignals auf ein Objekt innerhalb des überwachten Bereiches (200) hinweist.

3. Videoanzeigegerät nach einem der vorangehenden Ansprüche, bei dem der überwachte Bereich (200) einem Bereich entspricht, der innerhalb eines vorgegebenen Abstandes ausgehend von dem Bildschirm liegt.

4. Videoanzeigegerät nach Anspruch 3, bei dem der vorgegebene Abstand geringer ist als das 4-fache, vorzugsweise geringer ist als das 2-fache einer Bildschirmdiagonale (d2) des Bildschirms (11).

5. Videoanzeigegerät nach einem der vorangehenden Ansprüche, bei dem die Abstandsdetektorvorrichtung einen Infrarotsensor oder einen Ultraschallsensor umfasst.

6. Videoanzeigegerät nach einem der vorangehenden Ansprüche, bei dem die Abstandsdetektorvorrichtung einen Bewegungssensor zur Detektion sich bewegender Objekte in dem überwachten Bereich aufweist.

7. Videoanzeigegerät nach einem der vorangehenden Ansprüche, das dazu ausgebildet ist, das darzustellende Videosignal (DS) aus dem zugeführten Videosignal (VS) entsprechend einer Voreinstellung zu erzeugen, wenn das Detektionssignal darauf hinweist, dass für eine Zeitdauer länger als eine vorgegebene Zeitdauer kein Objekt in dem überwachten Bereich detektiert wurde.

8. Videoanzeigegerät nach einem der vorangehenden Ansprüche, bei dem der Bildschirm ein Flachbildschirm, insbesondere ein LCD-Bildschirm oder ein Plasmabildschirm, ist.

9. Verfahren zur Verarbeitung eines Videosignals (VS) und Darstellung eines durch das Videosignal (VS) repräsentierten Bildinhalts auf einem Bildschirm (11), aufweisend:
- Überwachen eines vorgegebenen Bereiches vor dem Bildschirm (11) auf das Vorhandensein von Objekten,
- Verarbeiten des Videosignals, (VS) in Abhängigkeit der Detektion von Objekten in dem überwachten Bereich (200) und von Bildverarbeitungsparametern, um ein verarbeitetes Signal (FS) zur Darstellung auf dem Bildschirm (11) zur Verfügung zu stellen, wobei die Bildverarbeitungsparameter abhängig von der Detektion von Objekten in dem überwachten Bereich (200) einstellbar sind ;
bei dem die einstellbaren Bildverarbeitungsparameter wenigstens eines der folgenden umfassen:
- einen Bildkontrast,
- eine Bildschärfe,
- eine Tiefenschärfe,
- einen Umfang einer Rauschunterdrückung, und
bei dem eine Verarbeitung des Videosignals (VS) unterbleibt, wenn ein Objekt innerhalb des überwachten Bereiches detektiert wird.

10. Verfahren nach Anspruch 9 bei dem der überwachte Bereich einem Bereich entspricht, der innerhalb eines vorgegebenen Abstandes ausgehend von dem Bildschirm (11) liegt.

11. Verfahren nach Anspruch 10, bei dem der vorgegebene Abstand geringer ist als das 4-fache, vorzugsweise geringer ist als das 2-fache einer Bildschirmdiagonale des Bildschirms (11).

12. Verfahren nach einem der Ansprüche 9 bis 11, bei dem das zugeführte Videosignal (VS) entsprechend einer Voreinstellung verarbeitet wird, wenn für eine Zeitdauer länger als eine vorgegebene Zeitdauer kein Objekt in dem überwachten Bereich detektiert wurde.

13. Verfahren nach einem der Ansprüche 9 bis 12, bei dem der Bildschirm (11) ein Flachbildschirm, insbesondere ein LCD-Bildschirm oder ein Plasmabildschirm, ist.

## Claims

1. A video display apparatus, comprising
- an input for supplying a video signal (VS),
- a display device (11, 12) which comprises a screen and can be fed with a video signal to be presented, for image representation,
- a distance detection device (17, 18) which is adapted to monitor a defined area in front of the screen (11) for objects present in this area, and which produces a detection signal, wherein the video signal (DS) to be presented being formed from the fed video signal (VS) in accordance with the detection signal, and
- at least one signal processing device (13) configured for processing the fed video signal (VS) depending on image processing parameters to provide a processed signal (FS) to be presented on the display device, wherein the image processing parameters of the signal processing device (13) being able to be adjusted depending on the detection signal;
wherein the adjustable image processing parameters comprise at least one of the following:
- an image contrast,
- an image definition,
- a depth of focus,
- an extent of noise suppression,
and further comprising:
a bypass circuit configured to supply the fed video signal (VS) to the signal processing device (13) and the processed signal (FS) to the display device (11, 12) in accordance with the detection signal, or to directly supply the fed video signal (VS) to the display device (11, 12) as the signal (DS) which is to be presented; wherein
the bypass circuit (21, 22) is configured to directly supply the fed video signal (VS) to the display device (11, 12) as the signal (DS) to be presented if the detection signal is indicative of an object within the monitored area.

2. The video display apparatus according to claim 1, which is adapted for suppressing a processing of the video signal (VS) by the at least one signal processing device (13) if the detection signal is indicative of an object within the monitored area (200).

3. The video display apparatus according to any of the preceding claims, wherein the monitored area (200) corresponds to an area situated within a defined distance starting from the screen.

4. The video display apparatus according to claim 3, wherein the defined distance is smaller than four times the length, preferably smaller than two times the length of a screen diagonal (d2) of the screen (11).

5. The video display apparatus according to any of the preceding claims, wherein the distance detection device comprises an infrared sensor or an ultrasonic sensor.

6. The video display apparatus according to any of the preceding claims, wherein the distance detection device comprises a motion sensor for detecting moving objects in the monitored area.

7. The video display apparatus according to any of the preceding claims, which is adapted for producing the video signal (DS) to be presented, from the fed video signal (VS) according to a pre-adjustment if the detection signal indicates that no object has been detected in the monitored area for a period longer than a defined period.

8. The video display apparatus according to any of the preceding claims, wherein the screen is a flat screen, in particular an LCD screen or a plasma screen.

9. A method of processing a video signal (VS) and presenting an image content represented by the video signal (VS) on a screen (11), comprising:
- monitoring a defined area in front of the screen (11) for the presence of any objects,
- processing the video signal (VS) depending on the detection of objects in the monitored area (200) and depending on image processing parameters to provide a processed signal (FS) intended for being presented on the screen (11), wherein the image processing parameters being able to be adjusted depending on the detection of objects in the monitored area (200);
wherein the adjustable image processing parameters comprise at least one of the following:
- an image contrast,
- an image definition,
- a depth of focus,
- an extent of noise suppression,
and
wherein the video signal (VS) is not processed if an object is detected within the monitored area.

10. The method according to claim 9, wherein the monitored area corresponds to an area situated within a defined distance starting from the screen (11).

11. The method according to claim 10, wherein the defined distance is smaller than four times the length, preferably smaller than two times the length of a screen diagonal of the screen (11).

12. The method according to any one of claims 9 to 11,
wherein the fed video signal (VS) is processed according to a pre-adjustment if no object has been detected in the monitored area for a period longer than a defined period.

13. The method according to any one of claims 9 to 12,
wherein the screen (11) is a flat screen, in particular an LCD screen or a plasma screen.

## Revendications

1. Appareil d'affichage vidéo, présentant
- une entrée pour la transmission d'un signal vidéo (VS),
- un dispositif d'affichage (11, 12) qui présente un écran et auquel un signal vidéo à représenter peut être transmis pour la représentation d'image,
- un dispositif de détecteur à distance (17, 18) qui est conçu pour surveiller une zone prédéfinie devant l'écran (11) en vue de détecter des objets présents dans la zone et qui génère un signal de détection, le signal vidéo à représenter (DS) étant formé à partir du signal vidéo transmis (VS) en fonction du signal de détection, et
- au moins un dispositif de traitement de signal (13) configuré pour traiter le signal vidéo transmis (VS) en fonction de paramètres de traitement d'image afin de mettre à disposition un signal traité (FS) pour la représentation sur le dispositif d'affichage, les paramètres de traitement d'image du dispositif de traitement de signal (13) étant réglables en fonction du signal de détection ;
où les paramètres de traitement d'image réglables comportent au moins l'un des paramètres suivants :
- un contraste d'image,
- une netteté d'image,
- une profondeur de champ,
- une capacité de réduction de bruit,
et comportant en outre :
un circuit de dérivation configuré pour transmettre le signal vidéo transmis (VS) au dispositif de traitement de signal (13) en fonction du signal de détection et pour transmettre le signal traité (FS) au dispositif d'affichage (11, 12), ou pour transmettre directement au dispositif d'affichage (11, 12) le signal vidéo transmis (VS) comme signal à représenter (DS) ;
le circuit de dérivation (21, 22) étant configuré pour transmettre directement au dispositif d'affichage (11, 12) le signal vidéo transmis (VS) comme signal à représenter (DS) si le signal de détection signale un objet au sein de la zone surveillée.

2. Appareil d'affichage vidéo selon la revendication 1, conçu pour qu'un traitement du signal vidéo (VS) par l'au moins un dispositif de traitement de signal (13) n'ait pas lieu si le signal de détection signale un objet au sein de la zone surveillée (200).

3. Appareil d'affichage vidéo selon l'une des revendications précédentes, où la zone surveillée (200) correspond à une zone qui est située au sein d'une distance prédéfinie en partant de l'écran.

4. Appareil d'affichage vidéo selon la revendication 3, où la distance prédéfinie est inférieure au quadruple, et de préférence inférieure au double, d'une diagonale d'écran (d2) de l'écran (11).

5. Appareil d'affichage vidéo selon l'une des revendications précédentes, où le dispositif de détecteur à distance comporte un capteur à infrarouge ou un capteur à ultrasons.

6. Appareil d'affichage vidéo selon l'une des revendications précédentes, où le dispositif de détecteur à distance présente un capteur de mouvement destiné à détecter des objets en mouvement dans la zone surveillée.

7. Appareil d'affichage vidéo selon l'une des revendications précédentes, conçu pour générer le signal vidéo à représenter (DS) à partir du signal vidéo transmis (VS) selon un préréglage si le signal de détection signale qu'aucun objet n'a été détecté dans la zone surveillée pendant une période dépassant une période prédéfinie.

8. Appareil d'affichage vidéo selon l'une des revendications précédentes, où l'écran est un écran plat, en particulier un écran à cristaux liquides (LCD) ou un écran à plasma.

9. Procédé de traitement d'un signal vidéo (VS) et de représentation d'un contenu d'image représenté par le signal vidéo (VS) sur un écran, présentant :
- la surveillance d'une zone prédédéfinie devant l'écran (11) en vue de détecter la présence d'objets,
- le traitement du signal vidéo (VS) en fonction de la détection d'objets dans la zone surveillée (200) et de paramètres de traitement d'image pour mettre à disposition un signal traité (FS) pour la représentation sur l'écran (11), les paramètres de traitement d'image étant réglables en fonction de la détection d'objets dans la zone surveillée (200) ;
où les paramètres de traitement d'image réglables comportent au moins l'un des paramètres suivants :
- un contraste d'image,
- une netteté d'image,
- une profondeur de champ,
- une capacité de réduction de bruit,
et où un traitement du signal vidéo (VS) n'a pas lieu si un objet est détecté au sein de la zone surveillée.

10. Procédé selon la revendication 9, où la zone surveillée correspond à une zone qui est située au sein d'une distance prédéfinie en partant de l'écran (11) .

11. Procédé selon la revendication 10, où la distance prédéfinie est inférieure au quadruple, et de préférence inférieure au double, d'une diagonale de l'écran (11).

12. Procédé selon l'une des revendications 9 à 11, où le signal vidéo transmis (VS) est traité selon un préréglage si aucun objet n'a été détecté dans la zone surveillée pendant une période dépassant une période prédéfinie.

13. Procédé selon l'une des revendications 9 à 12, où l'écran (11) est un écran plat, en particulier un écran à cristaux liquides (LCD) ou un écran à plasma.
